# EUROPEAN PATENT SPECIFICATION

(11) **EP 3 246 148 B1**
(45) Date of publication and mention of the grant of the patent: **19.12.2018**
(21) Application number: 17167387.4
(22) Date of filing: 20.04.2017
(51) Int. Cl.: B29C 64/245, B29C 64/153, B22F 3/105, B33Y 10/00

(54) **ADDITIVE LAYER MANUFACTURING BASE PLATE**
GRUNDPLATTE ZUR GENERATIVEN SCHICHTFERTIGUNG
PLAQUE DE BASE DE FABRICATION ADDITIVE PAR COUCHES

(30) Priority: 17.05.2016 GB 201608637
(43) Date of publication of application: 22.11.2017
(73) Proprietor: Rolls-Royce plc, London SW1E 6AT (GB)
(72) Inventor: Garry, Ian, Derby, Derbyshire DE24 8BJ (GB)
(74) Representative: Rolls-Royce plc

(56) References cited:
- EP-A1- 2 399 695
- DE-C1- 19 851 224
- US-A1- 2014 065 343

## Description

The present disclosure concerns an additive layer manufacturing apparatus, a method of manufacturing a part using an additive layer manufacturing apparatus and a part obtained from an additive layer manufacturing apparatus.

Additive layer manufacturing (ALM) can be used to manufacture components and is suited to manufacturing components with complex geometries. ALM can be broadly divided into two groups.

In a first group, material is deposited sequentially in patterned planar layers against a flat base plate, whereby the pattern of each layer represents a two dimensional cross section of a three dimensional shape of an object. As each layer is deposited atop a previous layer, a three dimensional object is built. Examples of this group of methods include; direct energy deposition (where focussed thermal energy is used to fuse materials as they are being deposited), material extrusion (where an extrusion head moves in a pattern selectively dispensing material through an orifice as it travels) and sheet lamination (where sheets of material already defining a two-dimensional pattern are bonded in sequence to build up the three dimensional object).

In the second group, the process starts with a bulk mass which may, for example, be a bed of powdered material such as a ceramic, a thermoplastic or elastomer, a ferrous alloy or a non-ferrous alloy, or a vat of liquid typically comprising a photopolymer. Regions within the mass are selectively treated in planar layers, for example by melting, sintering, photochemical reaction or interaction with a chemical bonding agent, to solidify. However unlike with the first group, the untreated material remains in a layer as the next layer is formed. Surplus (untreated) material may be removed when the three dimensional build is complete.

Where the bulk mass of a method of the second group is a bed of powdered material, this method is referred to as powder bed ALM. In powder bed ALM, regions are selectively treated by the application of, typically, laser sintering, laser melting or electron beam melting. Laser sintering is typically more suited to thermoplastics or elastomers, laser melting to ferrous or non-ferrous alloys, and electron beam melting to non-ferrous alloys.

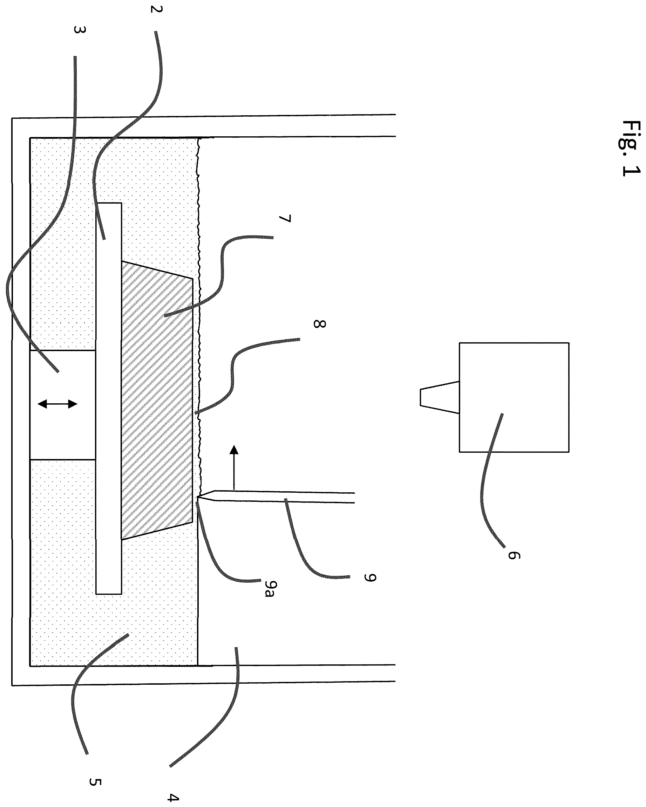

A known ALM apparatus for powder bed manufacture is shown in Figure 1. The apparatus comprises a flat baseplate 2 on a moveable platform 3 which is able to raise and lower the baseplate 2 (in opposing directions as represented by arrow P) within a reservoir 4. The reservoir 4 contains a bed of powdered material 5 which may, for example (but without limitation), be a metal, thermoplastic or ceramic powder which under treatment from a focussed energy beam from an energy beam source 6 forms a solid body 7. The solid body 7 is built up in planar layers from the flat baseplate 2 by focussing the energy beam at a top layer 8 of the powder 5. A new top layer 8 is deposited onto the solid body 7 after a previous layer has been treated by the energy beam and solidified to form part of the body 7. For example, the layer may be deposited from a hopper. The position of the top layer with respect to the energy beam source 6 can be controlled by adjusting the platform 3. By repeating the process of depositing layers of powder, selectively solidifying a 2-D cross-section of the component, and raising the moveable platform 3 for the next layer, a 3-D component is built.

For optimum results, it is necessary to ensure that the top layer 8, prior to treatment by an energy beam from source 6, is of a desired and a consistent thickness across its surface. Levelling and thickness control is achieved using a re-coater blade 9. The re-coater blade 9 of Figure 1 is typical of the prior art and comprises a rigid blade with a straight, bevelled edge. The re-coater blade 9 is mounted to a carriage (not shown) which allows it to be moved in two opposing directions as represented by arrow D. It can be seen, before a first pass, the tip 9a of the re-coater blade 9 sits relatively below a top surface 8a of the top layer 8. As the blade is swept across the top layer 8, material above the level of tip 9a is pushed across and away from an upper surface 7a of the solid body 7. Since the re-coater blade 9 is inflexible and the material of top layer 8 is a powder, a constant distance is maintained between the blade tip 9a and the upper surface 7a of the solid body 7. This results in a defined and consistent thickness of the top layer 8 after the sweep. Once the desired thickness has been achieved in the top layer 8, the layer can be treated by an energy beam from the source 6 adding to the existing solid body 7.

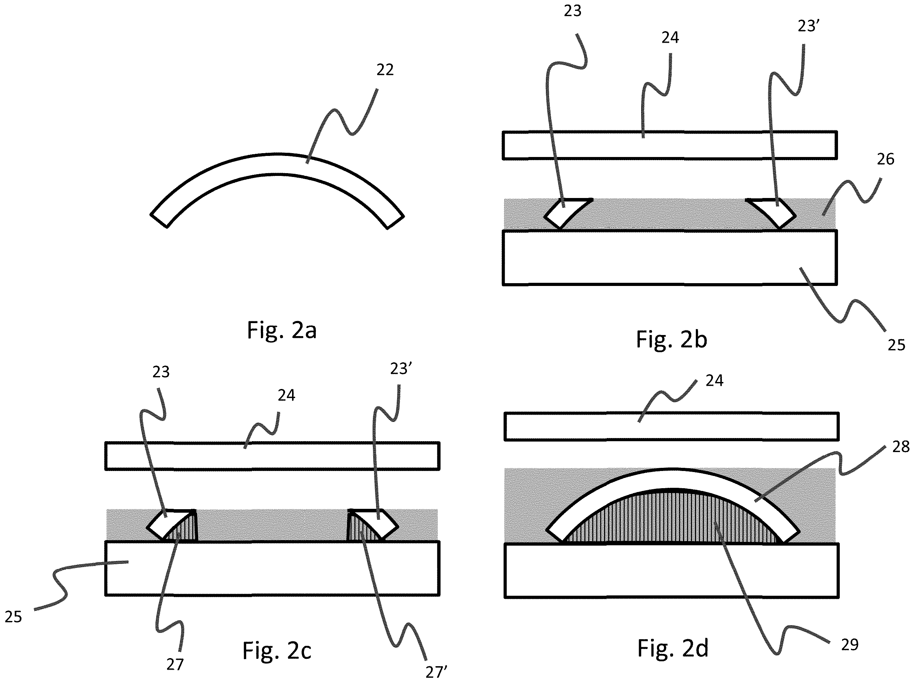

One challenge with building parts in this way is that during the process of building a component up in planar layers, elements of the part built component may be unsupported. This can occur when, for example, the part contains features whereby there is no solid support below the feature, between the part and the base plate. An example of this is shown in Figure 2 where the base of the part is curved. Figure 2a shows how the component has non-planar surfaces such that there is no suitable flat surface that can align against the base plate of an ALM machine. As such, Figure 2b shows how elements of the part manufactured component are unsupported and likely to collapse into the baseplate. A known solution to this is shown in Figure 2c, whereby a solid support structure is built out of the powder, i.e. the same material that the component is built out of, that is attached to and supports the elements of the part manufactured component. Figure 2d shows the completed component with support structure attached. The component is removed from the machine and all excess powder removed, leaving the component with the integral support structure attached. The support structure itself requires removing, for example by machining, such that the final component, as shown in Figure 2a, is achieved.

The support structure requires additional material and process time as well as an additional manufacturing step. Therefore when a component to be manufactured by ALM consists of non-planar surfaces such that a support structure is required, it is desired to have a simpler, quicker manufacturing method.

US2014065343 relates to a device for producing, repairing and/or replacing a component, particularly an aircraft component, by means of a powder that can be solidified by energy radiation of an energy radiation source, wherein the device comprises an application unit that is designed such that the powder can be applied onto an uneven surface by means of the application unit.

EP2399695 relates to applying layers of powder with electromagnetic radiation or particle radiation. A raw material powder layer is applied on a curved base level by a powder coating device.

According to a first aspect a powder bed additive layer manufacturing apparatus is provided for manufacturing a component, the apparatus comprising: a base plate comprising a set of axes X, Y, Z; a first re-coater blade; wherein the base plate comprises a build surface for receiving powder, and the build surface comprises a non-planar surface profile for complementing the shape of a component non-planar surface. The first re-coater blade has a blade profile that corresponds with the non-planar surface profile of the build surface. The first re-coater blade is configured such that it can traverse across the build surface, for providing a layer of powder having a consistent depth across the non-planar build surface during the manufacturing process.

The build surface is a non-planar, two-dimensional profiled first cross-section, coincident with the X axis. The blade profile of a first re-coater blade corresponds with the profiled first cross-section. The blade profile of a first re-coater blade is configurable to linearly traverse across the build surface along the Y axis.

The additive layer manufacturing apparatus comprises a second re-coater blade with a second blade profile. The build surface has a non-planar, two-dimensional profiled second cross-section, coincident with the Y axis; and the build surface is defined by the intersection of projecting the profiled first cross-section along the Y axis and projecting the profiled second cross-section along the X axis. The blade profile of the second re-coater blade corresponds with the profiled second cross-section. The second re-coater blade is configurable to linearly traverse across the build surface along the X axis, for providing a layer of powder having a consistent depth across the base non-planar build surface in combination with the first re-coater blade.

The set of axes X, Y, Z may be an orthogonal set of axes. The set of axes X, Y, Z may be substantially orthogonal, but where the angles between the different axes are not right angles. The set of axes X, Y, Z may not be orthogonal such that the angles between the different axes are acute or obtuse.

The base plate may have, but is not limited to, substantially square corners. The base plate may be square or rectangular with a defined thickness. The origin of the set of axes may be positioned anywhere with respect to the base plate. The set of axes may be aligned such that the X axis is pointed along the width of the base plate. The set of axes may be aligned such that the Y axis is pointed along the length of the base plate. The set of axes may be aligned such that the Z axis is pointed along the thickness of the base plate. The Z axis may be aligned so that it is pointing out of the top surface of the base plate, the top surface being the surface that is for receiving powder.

The build surface may be the surface of the base plate that in use receives powder for manufacture. The build surface may be the top surface of the base plate. Powder may be allowed to drop onto the build surface under gravity.

The non-planar build surface may be not flat. The non-planar build surface may comprise variations in the height of the surface in the Z direction. The non-planar build surface may comprise curvatures. The non-planar aspects of the build surface may be integral to the base plate.

The component to be manufactured may comprise a non-planar surface.

The first re-coater blade may have a blade profile shape that matches a cross sectional two-dimensional profile of the build surface. The cross sectional two-dimensional profile may be any cross section of the build surface.

The re-coater blade may traverse across the build surface in a direction normal to its longitudinal direction. The re-coater blade may traverse in a linear direction. The re-coater blade may traverse in a non-linear direction. The movement of the re-coater blade may be controlled by computer controlled manufacture. The re-coater blade may traverse across the build surface at a constant height above the build surface.

The build surface may comprise protrusions in the direction of the Z axis that are integral to the base plate, for complementing the shape of a component non-planar surface.

The protrusions may be rounded. The protrusions may comprise steps. The protrusions may extend out of the build surface of the base plate. The protrusions may define the build surface.

The base plate may be formed of a rigid material.

The base plate may be formed of a material with high rigidity, for example a metal or ceramic. The base plate may be formed of a material with high stiffness, for example a metal or ceramic. The profile of the build surface of the base plate may be machinable into the base plate

The cross-section may be a slice through the build surface where the shape of the build surface in the cross-section is non-planar. Non-planar may be not flat. In a two-dimensional frame of reference, non-planar may be not a straight line. The shape of the base plate may be prismatic. The shape of the base plate may be such that it is defined by projecting a single cross-section across the base plate.

The blade profile of a first re-coater blade may match at least part of the two-dimensional profiled cross section.

The first re-coater blade may traverse across the build surface at a fixed distance from the build surface. The first re-coater blade may traverse across the build surface along the Y axis. The first re-coater blade may traverse across the build surface in a direction coincident with the Y axis.

The build surface may have a consistent cross-sections along the Y axis.

The build surface may be formed of straight, linear lines coincident with the direction of the Y axis. Cross sections taken through the build surface that are coincident with the direction of the Y axis have a planar shape. The shape of the build surface may be defined by projecting a cross-section along the Y axis.

The second blade profile may be different to the first blade profile. The second blade profile may be the same as the first blade profile.

The build surface may be defined by sweeping the first cross-section along the Y axis to create a first swept profile and sweeping the second cross-section along the X axis to create a second swept profile, the build surface defined by points on a swept profile that fall within (i.e. are below), or are coincident with, the other profile. The build surface may be formed of straight lines in the direction of the Y axis and straight lines in the direction of the X axis to create a three-dimensional non-planar surface. The straight lines are all parallel with the plane formed by the X and Y axis. The straight lines in the direction of the Y axis are all pointed in a direction that passes through the first cross-section of the build surface. The straight lines in the direction of the X axis are all pointed in a direction that passes through the second cross-section of the build surface.

The additive layer manufacturing apparatus of the invention may be suited to manufacturing a part for a component of a gas turbine engine. The additive layer manufacturing apparatus may comprise powder that is a metallic powder.

The additive layer manufacturing apparatus may be for manufacturing a blade of a gas turbine engine. The additive layer manufacturing apparatus may be for manufacturing a fan blade and/or a compressor blade and/or a stator vane and/or a turbine blade of a gas turbine. The base plate may be shaped to only correspond to a single component. According to a second aspect there is provided a method for providing a component having a non-planar surface using a powder bed ALM process comprising a powder bed ALM apparatus according to the first aspect. The method comprises, sequentially, depositing powder in layers parallel to the non-planar build surface; traversing the first re-coater blade along the axis whereby to provide a layer of powder having a consistent depth across the base plate non-planar surface, traversing a second re-coater blade along the X axis across the surface of the powder, and selectively fusing portions of the layer to form the component shape.

The depth of the layer of powder may be measured in the direction of the Z axis. The shape of each layer of powder, after the first re-coater blade has traversed across it, may be the same as the one below it in the previous iteration of the sequence.

The method for providing a component having a non-planar surface may comprise providing a third re-coater blade with a different blade profile to the first re-coater blade profile. The method may comprise, after the step of selectively fusing a layer of the component, that the first re-coater blade is substituted with the third re-coater blade.

The third re-coater blade may then perform the step of traversing across the powder to provide a layer of powder having a consistent depth across the base plate. The shape of the layer of powder formed by the third re-coater blade may be different to the shape of the layer formed by the first re-coater blade. This method may be particularly useful for building a part whereby the build surface contains a step (i.e. a step change in height in the Z direction). Once the part has been built up to the height of the step, the first re-coater blade may be substituted with the third re-coater blade.

The method for providing a component having a non-planar surface may comprise providing a fourth re-coater blade with a different blade profile to the second re-coater blade profile. The method may comprise, after the step of selectively fusing a layer of the component, that the second re-coater blade is substituted with the fourth re-coater blade.

The fourth re-coater blade may then perform the step of traversing across the powder to provide a layer of powder having a consistent depth across the base plate. The shape of the layer of powder formed by the fourth re-coater blade may be different to the shape of the layer formed by the second re-coater blade. This method may be particularly useful for building a part whereby the build surface contains a step (i.e. a step change in height in the Z direction). Once the part has been built up to the height of the step, the second re-coater blade may be substituted with the fourth re-coater blade.

The method of making a part using the additive layer manufacturing apparatus as described and/or claimed herein can improve the process time and dimensional accuracy of the process as well as reducing the amount of material used. The method can remove the need to include an additional machining step to remove the support structure.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a powder bed ALM apparatus;
**Figure 2a** is a side view of a part to be manufactured by ALM;
**Figure 2b** shows the part of Figure 2a in a part-built state without a support structure;
**Figure 2c** shows the part of Figure 2b in a part-built state with a support structure;
**Figure 2d** shows the completed part of Figures 2a - 2c with support structure attached in a powder bed;
**Figure 3a** shows a curved base plate and re-coater blade;
**Figure 3b** shows a side view of the base plate of Figure 3a with the re-coater blade part way through traversing across the surface of the powder;
**Figure 3c** shows an end-on view of the curved base plate of Figure 3a with the first layer solidified;
**Figure 3d** shows an end-on view of a part after made using the base plate and re-coater blade of Figures 3a to 3c, after multiple layers have been solidified;
**Figures 4a****-d** shows a selection of shaped base plates;
**Figure 5a** shows a baseplate with a double curvature;
**Figure 5b** shows a first re-coater blade traversing across the baseplate of Figure 5a;
**Figure 5c** shows a second re-coater blade traversing across the baseplate of figure 5a;
**Figure 5d** shows a top down view of the base plate of Figure 5a;
**Figure 6a** is a side view showing a method of constructing layers of a part around a step in the baseplate;
**Figure 6b** is a side view showing the method of Figure 6a with further layers added above the step; and
**Figure 7a and Figure 7b** show an alternative method of constructing layers around a step in the baseplate.

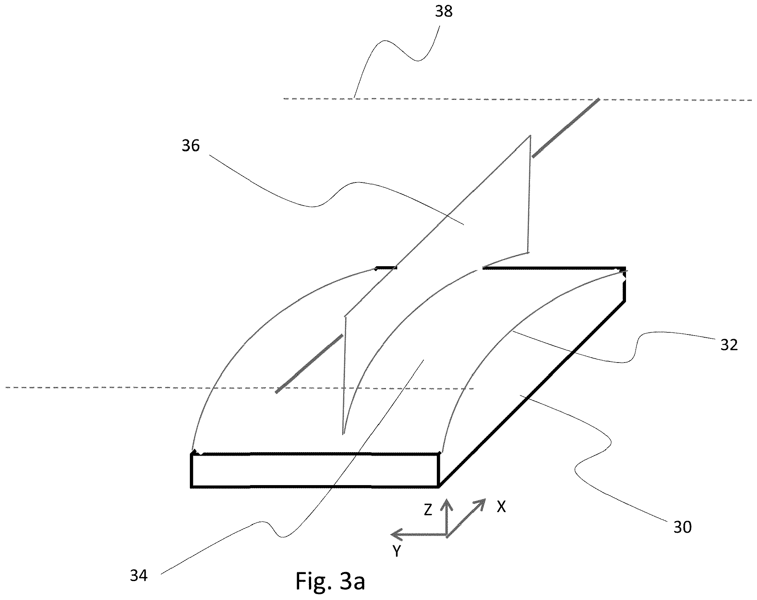

Referring to Figure 3a there is provided a curved base plate 30. The base plate 30 has a set of axes X, Y, Z. The top surface of the base plate 30 is the build surface 34. The curve of the build surface 34 is defined by the build surface profile 32. The re-coater blade 36 can traverse along rails 38 in the Y direction.

The re-coater blade 36 has a blade profile that corresponds with the build surface profile 32. As can be seen in Figure 3a, the re-coater blade 36 has the same profile as the build surface profile 32, such that when the re-coater blade 36 traverses along the Y axis it will always be at the same distance away from the build surface 34 for creating an even layer of powder in use.

The build surface profile 32 is an example of a two-dimensional cross-sectional profile aligned with the X axis. The curve in the build surface 34 is an example of a non-planar build surface.

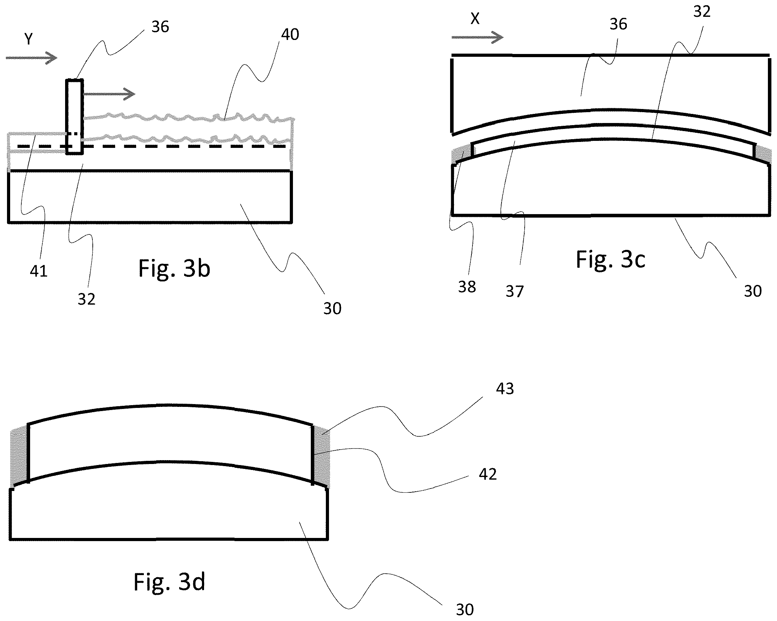

Figure 3b shows a side view of base plate of figure 3a i.e. looking along the X direction. Figure 3b shows the re-coater blade part way through its passage across a layer of powder on the build surface. Figure 3b shows the base plate 30, the re-coater blade 36, an un-smoothed layer of powder 40 as deposited on the base plate and a smoothed layer of powder 41 created by the action of traversing the re-coater blade 36 over the layer of powder 40.

The re-coater blade 36 traverses linearly along the Y direction, smoothing the powder as it travels. It can be seen from Figure 3b how as the re-coater blade 36 traverses across the un-smoothed powder 40, it creates a smoothed layer of powder 41 of even depth across the base plate 30. The layer of powder 41 follows the curvature of the build surface 32.

Figure 3c shows an end on view of the base plate of figure 3a i.e. looking along the Y direction. The figure shows the features of figure 3a as well as a solidified first layer 37 of the part to be manufactured and excess powder 38.

The first layer 37 of the part is solidified into the smoothed layer of powder 38 of Figure 3b. The first layer 37 of the part also follows the curvature of the build surface 32 of the base plate 30. In Figure 3c the re-coater blade 36 has been moved into position for the next, second layer of powder. This can be achieved by lowering the base plate 30 or raising the re-coater blade 36. The re-coater blade 36 has been moved by a distance equal to the depth of a first layer 37 of the part to be manufactured.

It can most clearly be seen in Figure 3c how the shape of the blade of the re-coater blade 36 matches, or corresponds, with the shape of the build surface 32 of the base plate 30. This allows the re-coater blade 36 to create layers of powder of even depth across the build surface 32.

The parts of the layer of powder that haven't been solidified remain as excess powder 38 around the first layer 37.

Figure 3d shows the same view as Figure 3c but after multiple layers of powder have been deposited and solidified and the part 42 has been completed.

The base plate 30 in Figures 3a to 3d is prismatic. The shape fits the description of a prism whereby the two ends have the same shape and size and are parallel to each other (where one of the ends is shown, end on, clearly in Figure 3c), and all other sides are parallelograms. The sides are parallelograms that connect all of the edges of the two ends to each other. The build surface 34 in Figure 3 is a parallelogram that is curved so that it connects the top edge of each of the ends. The bottom surface of the base plate 30, i.e. the obverse of the build surface 34, is flat and all connected sides are at 90 degrees to the bottom surface.

A method of manufacturing a part can be explained using figures 3a to 3d. Powder is deposited on the build surface 32 of the base plate 30 forming an un-smoothed layer of powder 40. A re-coater blade 36 is then traversed across the un-smoothed powder layer 40 creating a smoothed layer 41 of even depth across the base plate 30. These two steps can be seen in Figure 3b whereby the re-coater blade 36 is part way across smoothing the un-smoothed layer of powder 40. Once the even layer of smoothed powder 41 is achieved, the parts of the powder 41 that correspond to the part are solidified using an energy source. This creates the first layer of the part 37. This can be seen in Figure 3c, after the re-coater blade 36 has been raised (or the base plate 30 lowered) to accommodate the next layer of powder. It can be seen from Figure 3c that excess powder 38 remains in the areas not solidified. The process is repeated for the next layer, and so on, until the part 42 is built up, as shown in Figure 3d. Like Figure 3c, Figure 3d shows how the excess powder 43 remains around the part 42.

The part manufactured from the method described will have had its layers built up in curved layers rather than planar layers as in the prior art. Under scrutiny the curved layers will give the part different properties that will distinguish it from a part manufactured in planar layers. For example (but not limited to) grain structure under a microscope and mechanical properties in different directions.

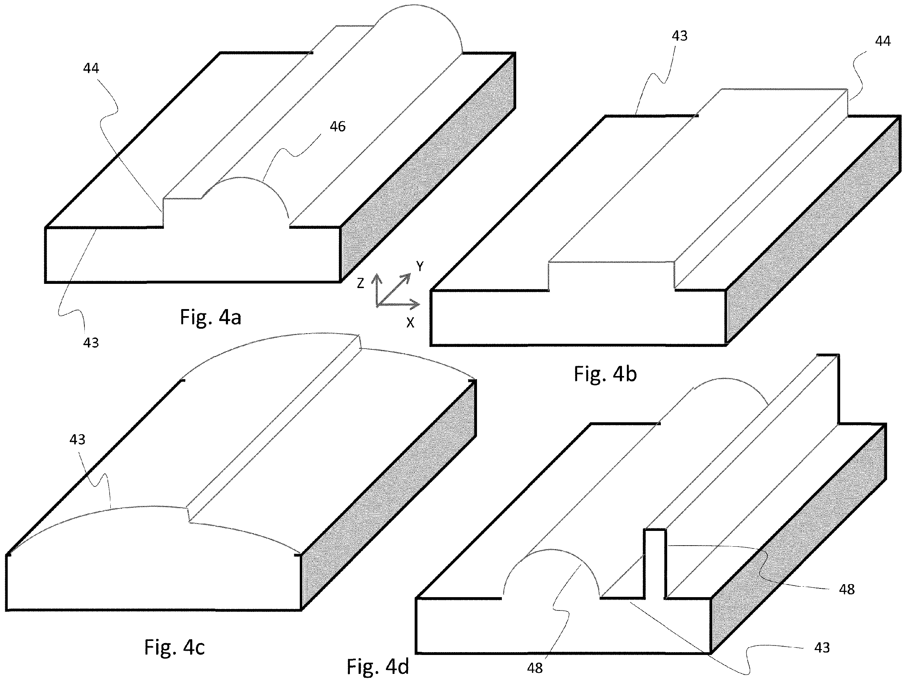

Referring to Figures 4a to 4d, further examples of the shapes of the base plate are illustrated. All of the shapes, similar to that shown in Figure 3, have two ends that have the same shape and are parallel to each other, with parallelograms connecting the two ends. Where the edges of the ends of the base plate are curved, the parallelograms that connect the respective curved edges of the two ends will also be curved. As can be seen in Figure 4a, the set of axes X, Y and Z are also illustrated, and similar to Figure 3 the direction X represents the direction over which the build surface is profiled and the direction Y represents the direction that the re-coater blade traverses in over the build surface, and also the direction that the build surface is even or linear.

Figures 4a to 4d show different profiles of the base plate and build surface. For example Figure 4a shows a stepped profile including step 44 to create a central raised portion with a curved section 46. However in other examples there could be a plurality of steps. The plurality of steps can create various raised portions or portions at different heights. Figure 4b shows how the shape can comprise two steps 44. Figure 4c shows another combination of a shallow curvature 43 and a step 44. Figure 4d shows protrusions 48 from the baseplate. These protrusions 48 can be a square shaped protrusion extending out of the baseplate or a curved shaped protrusion, both of which are shown on Figure 4d. The protrusions 48 can be any shape, for example a combination of straight sections and curved sections. In Figure 4d they extend out of the base plate in a direction normal to the plane of the build surface i.e. in the Z direction. The examples shown in Figure 4d include vertical (i.e. normal to the plane of the build surface of the base plate) parts of the protrusion but no undercuts. An undercut would extend away from the base plate at an acute angle to the plane of the build surface. An undercut of a protrusion would be formed by the protrusion extending over the base plate such that material of the protrusion extends over the material of the base plate with a gap in between.

In other embodiments the base plate can be any shape. The axes X, Y and Z are orthogonal axes in Figures 3 and 4 but they can be at other angles to each other if the base plate does not have square corners.

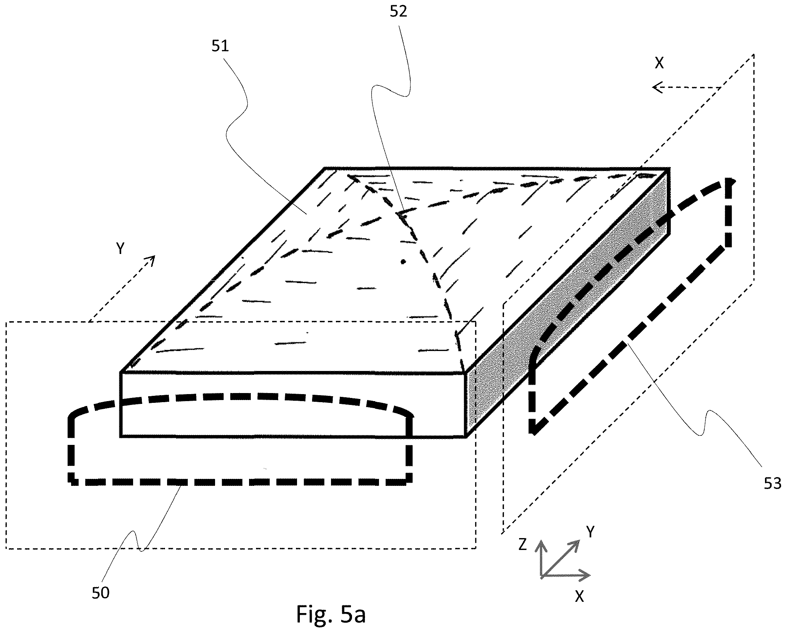

Referring to Figures 5a to 5d there is provided a base plate 48 with a curvature 52 of the build surface 51 defined by the interaction of two two-dimensional profiles 50 and 53. Figure 5a shows two profiles, profile one 50 and profile two 53. Profile one 50 and profile two 53 are two dimensional profiles. Profile one 50 and profile two 53 are profiles of the base plate 48 in Figure 5a but they can also just be profiles of the build surface 51 i.e. a profile that is a line rather than the closed profiles shown in Figure 5a. A set of axes X, Y and Z are shown.

Profile one 50 is a two-dimensional profile coincident with the X axis and profile two 53 is a two-dimensional profile coincident with the Y axis. The axes in Figure 5a are orthogonal axes, however other arrangements of axes are possible. The shape of the build surface 51 includes a curvature 52 in more than one direction. For example the build surface 51 is defined by the interaction of extending profile one 50 in direction Y and extending profile two 53 in direction X and constructing the shape of the base plate from the volume intersected by profile one 50 and profile two 53 i.e. the volume swept by both profiles. In alternative embodiments profile one and profile two are just profiles of the build surface and the curvature of the build surface is defined by the intersection of projecting profile one along the Y axis and profile two along the X axis.

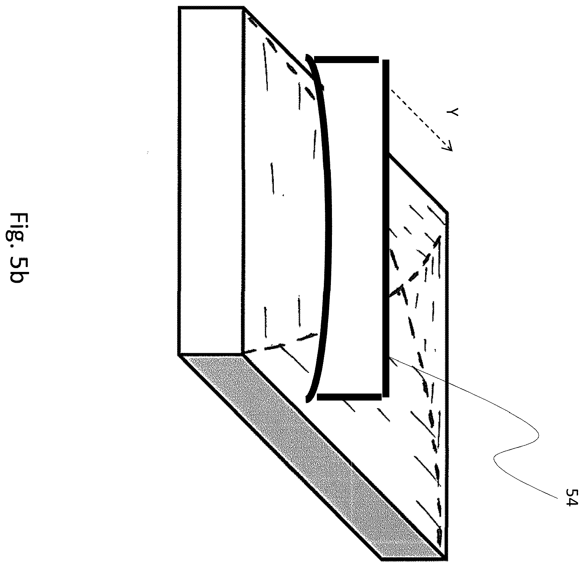

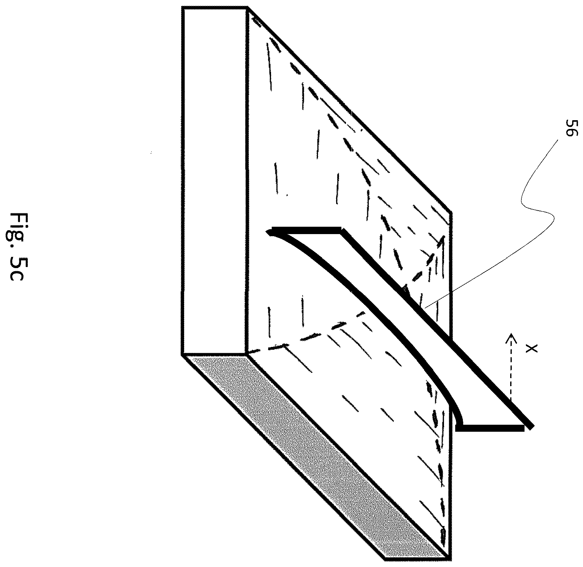

Figure 5b shows the base plate 48 of figure 5a with a first re-coater blade 54. Figure 5c shows the base plate 48 of figure 5a with a second re-coater blade 56. The shape of the build surface 51 defined by profile one 50 and profile two 53 are such that a first re-coater blade 54 can travel over the surface in direction Y whereby the shape of the profile of the first re-coater blade 54 corresponds to the first profile 50. The second re-coater blade 56 can travel over the surface in a linear direction coincident with direction X. Figure 5b shows the first re-coater blade 54 part way through traversing across the build surface 51 and Figure 5c shows the second re-coater blade 56 part way through traversing across the build surface 51. The build surface 51 can be defined by sweeping the first re-coater blade 54 across the base plate 48 in the Y direction and traversing the second re-coater blade 56 across the base plate 48 in the X direction and creating the build surface 51 from the volume underneath the swept volumes of the first re-coater blade 54 and second re-coater blade 56.

The first re-coater blade 54 and second re-coater blade 56 are arranged such that once they have traversed over the build surface 51 the powder will be an even vertical depth (i.e. in the Z direction) over the build surface 51.

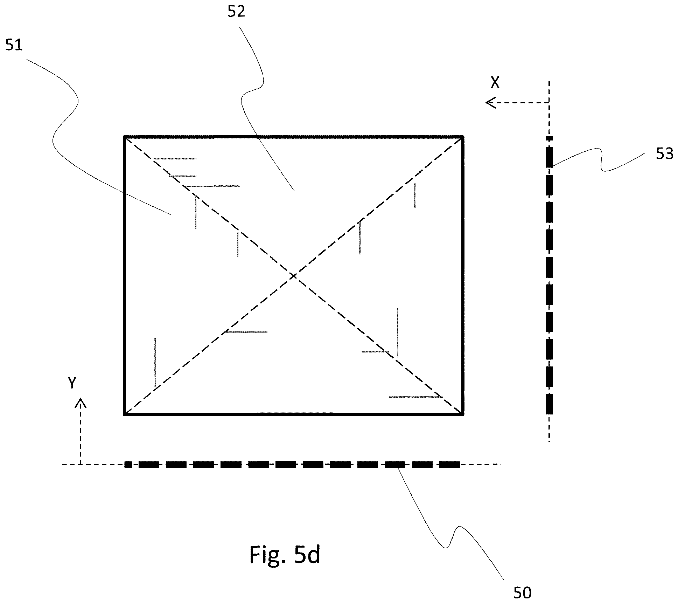

Referring to Figure 5d, a plan view of the base plate is shown with a double curvature. In this embodiment, the directions X and Y are orthogonal. In other embodiments, other angles between X and Y may exist.

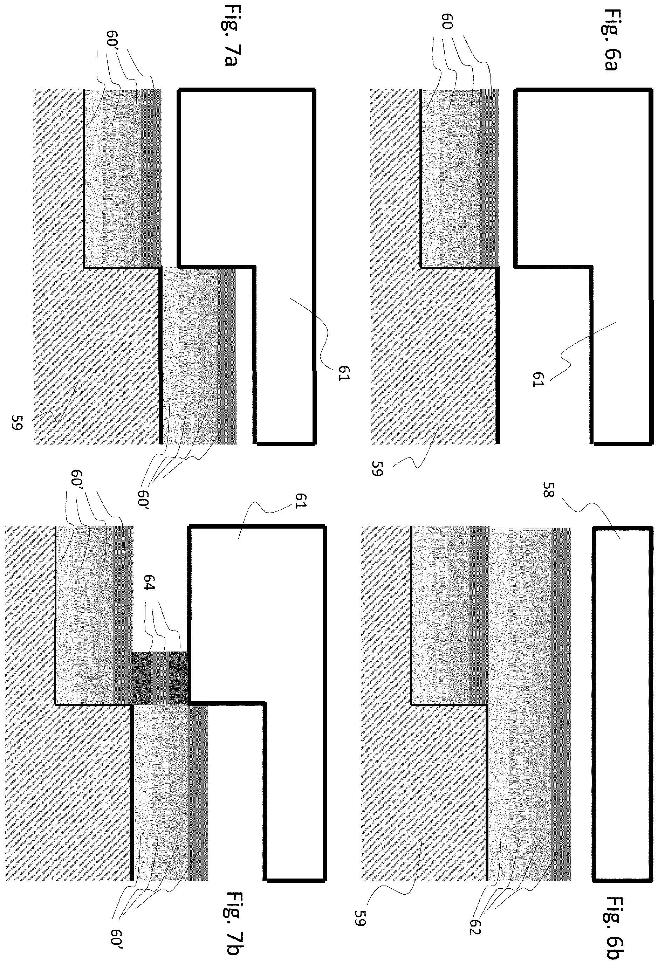

Referring to Figures 6a and 6b there is provided a shaped base plate 59 and re-coater blade 61 whereby the shape of the re-coater blade 61 corresponds with the shape of the base plate 59. The base plate 59 includes a step with a vertical side. Figure 6a and 6b show a method of manufacturing a part in layers 60 around the step. First, as shown in Figure 6a, the material below the step is built up using a re-coater blade 61 that corresponds in profile to the base plate 59. After the material is built up to the level of the top of the step, the re-coater blade 61 is changed so that the profile of the replaced re-coater blade 58 corresponds to both the top of the step and the material built up below the step. As can be seen in Figure 6b, the replaced re-coater blade 58 now has a flat profile. Further layers 62 are then built up that span both the top of the step and the layers 60 below the step.

Figures 6a and 6b show the layers 60 and 62 as a plurality of distinct layers. This is for diagrammatical purposes, in the completed part the layers may not be visibly distinct from each other (although apparent under scrutiny).

An alternative embodiment of the method for building a part around a step is shown in Figure 7. Figure 7a shows how material is built up using a base plate 59 and a blade profile 61 that match. The layers 60' are built up above and below the step simultaneously but include a disjoint across the step. Once the layers 60' below the step has been built up to the height of the top of the step then further layers 64 are built up between disjoint between the layers 60' above and below the step. The further layers 64 are for joining the layers 60' below the step and above the step.

## Claims

1. A powder bed additive layer manufacturing apparatus for manufacturing a component, the apparatus comprising:
a base plate (30, 48) comprising a set of axes X, Y, Z;
a first re-coater blade (36, 50); wherein
the base plate (30, 48) comprises a build surface (34, 51) for receiving powder, and the build surface (34, 51) comprises a non-planar surface profile (32) for complementing the shape of a component non-planar surface; and
the first re-coater blade (36, 54) has a blade profile that corresponds with the non-planar surface profile (32) of the build surface (34, 51) ; and
the first re-coater blade (36, 54) is configured such that it can traverse across the build surface (34, 51), for providing a layer of powder having a consistent depth across the non-planar build surface during a manufacturing process; and
the build surface has a non-planar, two-dimensional profiled first cross-section (50), coincident with the X axis; and
the blade profile of the first re-coater blade (54) corresponds with the profiled first cross-section and is configured to linearly traverse across the build surface (51) along the Y axis; **Characterized in** the apparatus further comprising
a second re-coater blade (56) with a second blade profile; wherein
the build surface (51) has a non-planar, two-dimensional profiled second cross-section, coincident with the Y axis; and
the build surface (51) is defined by the intersection of projecting the profiled first cross-section along the Y axis and projecting the profiled second cross-section along the X axis; and
the blade profile of the second re-coater blade (56) corresponds with the profiled second cross-section; wherein
the second re-coater blade is configured to linearly traverse across the build surface along the X axis, for providing a layer of powder having a consistent depth across the base non-planar build surface in combination with the first re-coater blade.

2. An apparatus according to claim 1, wherein
the build surface comprises protrusions in the direction of the Z axis that are integral to the base plate (30,48), for complementing the shape of a component non-planar surface.

3. An apparatus according to claim 1 or claim 2, wherein the base plate (30, 48) is formed of a rigid material.

4. An apparatus according to any one of the previous claims, wherein the build surface (34, 51) has consistent cross-sections along the Y axis.

5. An apparatus according to any previous claim for manufacturing a part for a component of a gas turbine engine, wherein the powder is a metallic powder.

6. A method for providing a component having a non-planar surface using a powder bed ALM process comprising:
providing a powder bed ALM apparatus according to claim 1, the method comprising:
sequentially, depositing powder in layers parallel to the non-planar build surface; traversing the first re-coater blade (36, 54) along the Y axis whereby to provide a layer of powder having a consistent depth across the base plate non-planar surface, traversing the second re-coater blade (56) along the X axis across the surface of the powder, and selectively fusing portions of the layer to form the component shape.

7. A method according to claim 6, further comprising:
providing a third re-coater blade with a different blade profile to the first re-coater blade profile; and
after the step of selectively fusing a layer of the component, the first re-coater blade is substituted with the third re-coater blade.

8. A method according to claim 7, further comprising:
providing a fourth re-coater blade with a different blade profile to the second re-coater blade profile; and
after the step of selectively fusing a layer of the component, the second re-coater blade is substituted with the fourth re-coater blade.

## Patentansprüche

1. Pulverbett-Additivschichtherstellungsvorrichtung zur Herstellung eines Bauteils, wobei die Vorrichtung Folgendes umfasst:
eine Basisplatte (30, 48), die einen Satz von Achsen X, Y, Z umfasst;
eine erste Abstreichklinge (36, 50); wobei
die Basisplatte (30; 48) eine Bauoberfläche (34, 51) zum Aufnehmen von Pulver umfasst, und die Bauoberfläche (34, 51) ein nichtebenes Oberflächenprofil (32) zum Komplementieren der Form einer nichtebenen Bauteiloberfläche umfasst; und
wobei die erste Abstreichklinge (36, 54) ein Klingenprofil aufweist, das dem nichtebenen Oberflächenprofil (32) der Bauoberfläche (34, 51) entspricht; und
wobei die erste Abstreichklinge (36, 54) so konfiguriert ist, dass sie die Bauoberfläche (34, 51) überqueren kann, um eine Pulverschicht bereitzustellen, die während des Herstellungsverfahrens eine einheitliche Tiefe über die nichtebene Bauoberfläche aufweist; und
wobei die Baufläche einen nichtebenen, zweidimensionalen profilierten ersten Querschnitt (50) aufweist, der mit der X-Achse übereinstimmt; und
wobei das Klingenprofil der ersten Abstreichklinge (54) dem profilierten ersten Querschnitt entspricht und dazu konfiguriert ist, die Bauoberfläche (51) linear entlang der Y-Achse zu überqueren; **dadurch gekennzeichnet, dass** die Vorrichtung ferner eine zweite Abstreichklinge (56) mit einem zweiten Klingenprofil umfasst; wobei die Bauoberfläche (51) einen nichtebenen, zweidimensionalen profilierten zweiten Querschnitt aufweist, der mit der Y-Achse übereinstimmt; und
wobei die Bauoberfläche (51) durch den Schnittpunkt der Abbildung des profilierten ersten Querschnittes entlang der Y-Achse und der Abbildung des profilierten zweiten Querschnitts entlang der X-Achse definiert ist; und
wobei das Klingenprofil der zweiten Abstreichklinge (56) dem profilierten zweiten Querschnitt entspricht; wobei
die zweite Abstreichklinge dazu konfiguriert ist, die Bauoberfläche linear entlang der X-Achse zu überqueren, um eine Pulverschicht bereitzustellen, die in Kombination mit der ersten Abstreichklinge eine einheitliche Tiefe über die nichtebene Bauoberfläche aufweist.

2. Vorrichtung nach Anspruch 1, wobei
die Bauoberfläche Vorsprünge in die Richtung der Z-Achse umfasst,
die mit der Basisplatte (30, 48) einstückig ist,
um die Form einer nichtebenen Bauteiloberfläche zu komplementieren.

3. Vorrichtung nach Anspruch 1 oder Anspruch 2, wobei die Basisplatte (30, 48) aus einem starren Material ausgebildet ist.

4. Vorrichtung nach einem der vorhergehenden Ansprüche, wobei
die Bauoberfläche (34, 51) einheitliche Querschnitte entlang der Y-Achse aufweist.

5. Vorrichtung nach einem der vorhergehenden Ansprüche zum Herstellen eines Teils für ein Bauteil eines Gasturbinenmotors, wobei das Pulver ein Metallpulver ist.

6. Verfahren zum Bereitstellen eines Bauteils, das eine nichtebene Oberfläche aufweist, unter Verwendung eines Pulverbett-Additivschichtherstellungsprozesses, wobei das Verfahren Folgendes umfasst:
Bereitstellen einer Pulverbett-Additivschichtherstellungsvorrichtung nach Anspruch 1, wobei das Verfahren Folgendes umfasst:
sequentielle Anordnung von Pulver in Schichten parallel zu einer nichtebenen Bauoberfläche;
Überqueren durch die erste Abstreichklinge (36, 54) entlang der Y Achse, um dadurch eine Pulverschicht bereitzustellen, die über die nichtebene Basisplattenoberfläche eine einheitliche Tiefe aufweist, Überqueren der Pulveroberfläche durch die zweite Abstreichklinge (56) entlang der X-Achse, und selektives Verschmelzen von Abschnitten der Schicht, um eine Bauteilform zu bilden.

7. Verfahren nach Anspruch 6, ferner umfassend:
Bereitstellen einer dritten Abstreichklinge, die ein Klingenprofil aufweist, das sich von dem ersten Abstreichklingenprofil unterscheidet; und
wobei nach dem Schritt des selektiven Verschmelzens einer Schicht des Bauteils die erste Abstreichklinge durch die dritte Abstreichklinge ersetzt wird.

8. Verfahren nach Anspruch 7, ferner umfassend:
Bereitstellen einer vierten Abstreichklinge, die ein Klingenprofil aufweist, das sich von dem zweiten Abstreichklingenprofil unterscheidet; und
wobei nach dem Schritt des selektiven Verschmelzens einer Schicht des Bauteils die zweite Abstreichklinge durch die vierte Abstreichklinge ersetzt wird.

## Revendications

1. Appareil de fabrication d'une couche d'additif pour lit de poudre, pour la fabrication d'un composant, l'appareil comprenant :
une semelle (30, 48) comprenant un ensemble d'axes X, Y, Z ;
une première lame de ré-enduisage (36, 50) ;
la semelle (30, 48) comprenant une surface de construction (34, 51) pour la réception de la poudre, et la surface de construction (34, 51) comprenant un profil de surface non plan (32) venant compléter la forme de la surface non plane d'un composant ; et
la première lame de ré-enduisage (36, 54) présentant un profil de lame correspondant au profil de surface non plan (32) de la surface de construction (34, 51) ; et
la première lame de ré-enduisage (36, 54) étant configurée de façon qu'elle puisse se déplacer à travers la surface de construction (34, 51) pour la constitution d'une couche de poudre à profondeur homogène à travers la surface de construction non plane au cours d'un procédé de fabrication ; et
la surface de construction possédant une section transversale profilée bidimensionnelle non plane (50) correspondant à l'axe X ; et
le profil de lame de la première lame de ré-enduisage (54) correspondant à la première section transversale profilée, et étant configurée pour se déplacer de façon linéaire à travers la surface de construction (51) le long de l'axe Y ;
**caractérisé en ce que** l'appareil comprend en outre une deuxième lame de ré-enduisage (56) présentant un deuxième profil de lame ; la surface de construction (51) possédant une deuxième section transversale profilée bidimensionnelle non plane correspondant à l'axe Y ; et
la surface de construction (51) étant définie par l'intersection de saillie de la première section transversale profilée le long de l'axe Y, et la saillie de la deuxième section transversale profilée le long de l'axe X ;
le profil de lame de la deuxième lame de ré-enduisage (56) correspondant à la deuxième section transversale profilée ;
la deuxième lame de ré-enduisage étant configurée pour se déplacer de façon linéaire à travers la surface de construction le long de l'axe X, pour la constitution d'une couche de poudre à profondeur homogène à travers la surface de construction non plane de base conjointement avec la première lame de ré-enduisage.

2. Appareil selon la revendication 1, dans lequel
la surface de construction comprend des saillies, dans la direction de l'axe Z, faisant partie intégrante de la semelle (30,48), pour compléter la forme d'une surface non plane du composant.

3. Appareil selon la revendication 1 ou la revendication 2, la semelle (30, 48) étant composée d'un matériau rigide.

4. Appareil selon une quelconque des revendications précédentes, dans lequel la surface de construction (34, 51) possède des sections transversales homogènes le long de l'axe Y.

5. Appareil selon une quelconque des revendications précédentes pour la fabrication d'un élément pour un composant d'un moteur de turbine à gaz, dans lequel la poudre est une poudre métallique.

6. Méthode de fourniture d'un composant possédant une surface non plane utilisant un procédé de fabrication d'une couche d'additif (ALM) de lit fluidisé, comprenant :
la fourniture d'un appareil ALM pour lit fluidisé selon la revendication 1, la méthode comprenant :
le dépôt en séquence de poudre en couches parallèles à la surface de fabrication non plane ;
le déplacement de la première lame de ré-enduisage (36, 54) le long de l'axe Y de façon à constituer une couche de poudre d'une profondeur homogène à travers la surface non plane de la semelle ;
le déplacement de la deuxième lame de ré-enduisage (56) le long de l'axe X à travers la surface de la poudre ; et
la fusion sélective des parties de la couche de façon à constituer la forme du composant.

7. Méthode selon la revendication 6, comprenant en outre :
la fourniture d'une troisième lame de ré-enduisage, avec un profil de lame différent de celui du profil de la première lame de ré-enduisage ; et
après l'étape de fusion sélective d'une couche du composant, la première lame de ré-enduisage étant remplacée par la troisième lame de ré-enduisage.

8. Méthode selon la revendication 7, comprenant en outre :
la fourniture d'une quatrième lame de ré-enduisage, possédant un profil de lame différent de celui du profil de la deuxième lame de ré-enduisage ; et
après l'étape de fusion sélective d'une couche du composant, la deuxième lame de ré-enduisage étant remplacée par la quatrième lame de ré-enduisage.
